# EUROPEAN PATENT APPLICATION

(11) **EP 1 640 876 A2**
(43) Date of publication of application: **29.03.2006**
(21) Application number: 05105000.3
(22) Date of filing: 08.06.2005
(51) Int. Cl.: G06F 17/27

(54) **Method, system, and apparatus for processing information based on the discovery of semantically labeled strings**

(30) Priority: 24.09.2004 US 948948
(71) Applicant: MICROSOFT CORPORATION, Redmond, WA 98052 (US)
(72) Inventor: Yalovsky, David, 98052, Redmond (US); Abbar, Mohamed Anas, 98052, Redmond (US); Moore, Thomas G., 98052, Redmond (US)
(74) Representative: Zimmer, Franz-Josef

(57) **Abstract**

A method, system, and apparatus for providing information related to a location or geographic region. When a string is entered into an application program, the string is analyzed to determine whether the string relates to one or more locations or geographic regions. If the string relates to a location or geographic region, the string is associated with additional information related to the location or geographic region. A list of actions may be provided, wherein each action allows for the selection of the additional information. In one embodiment, a geographical map, telephone area codes or time conversion information may be selected and displayed. In other embodiments, currency conversions related to a specific country may be selected and displayed.

## Description

### CROSS-REFERENCE TO RELATED APPLICATION(S)

This is a continuation-in-part of U.S. patent application No. 10/140,544, entitled "METHOD, SYSTEM, AND APPARATUS FOR CONVERTING NUMBERS BETWEEN MEASUREMENT SYSTEMS BASED UPON SEMANTICALLY LABELED STRINGS," filed May 7, 2002, the benefit of the filing date of which is hereby claimed under 35 U.S.C. § 120. The subject matter of such application is specifically incorporated herein by reference.

### TECHNICAL FIELD

Embodiments of the present invention relate to software applications. More particularly, embodiments of the invention relate to software applications that process and display information related to a location or geographic area based on the discovery of semantically labeled strings.

### BACKGROUND

In many real-world scenarios, users often prefer to access additional information about a person, corporation, address, etc. that appears in a document, e.g., a text document, spreadsheet, email, etc. SmartTag® technology developed by Microsoft Corporation, Redmond, Washington provides a mechanism to add and access such contextual information to documents. In one configuration, a dashed line or other type of visual indicator is positioned below a particular string to indicate that the string has a SmartTag (i.e., contextual information associated with the portion of text). The SmartTag® technology includes a recognizer that examines the document for preselected strings for which sets of associated contextual information are available. The contextual information is stored in a dynamically linked library (DLL) or other datastore. The recognizer then attaches this contextual information to the recognized string. The SmartTag® technology also provides an additional graphic that displays a menu of SmartTag actions. The SmartTag® technology includes an action handler that processes the contextual information associated with the recognized string to provide actions that the user can take with regard to the recognized string.

Although this example illustrates SmartTags based on a recognized string of a text document, SmartTags can be limited to certain types of data, such as stock ticker symbols. Such implementations are inoperable for users working with different types of data. Thus, there is a continuing need to apply the SmartTag® technology different types of targeted information.

### SUMMARY

Embodiments of the present invention solve the above-described problems by providing a method, system, and apparatus for obtaining and displaying information related to a location or geographic region. When a string is entered into an application program, the string is analyzed to determine whether the string relates to one or more locations or geographic regions. If the string relates to a location or geographic region, the string is associated with additional information related to the location or geographic region. A list of actions may be provided, wherein each action allows for the selection of the additional information. In one embodiment, a geographical map, telephone area codes, currency rate, tourist information, airport information, or time conversion information may be selected and displayed. In other embodiments, currency conversions related to a specific country may be selected and displayed.

### BRIEF DESCRIPTION OF THE DRAWINGS

FIGURE 1 is a block diagram showing the architecture of a personal computer that provides an illustrative operating environment for embodiments of the present invention;
FIGURE 2 is a block diagram that shows a software architecture for recognizing, labeling, and performing actions on recognized strings of text according to various embodiments of the present invention;
FIGURES 3A-3B are screen diagrams showing screen displays including an action menu for recognized text strings provided by various embodiments of the present invention; and
FIGURE 4 is a flow diagram showing an illustrative routine for processing a string input provided at an application program according to one actual embodiment of the present invention.

### DETAILED DESCRIPTION

As described briefly above, embodiments of the present invention provide a method, system, apparatus, and computer-readable medium for obtaining and displaying information related to a location or geographic region. In the following detailed description, references are made to the accompanying drawings that form a part hereof, and in which are shown by way of illustration specific embodiments or examples. These embodiments may be combined, other embodiments may be utilized, and structural changes may be made without departing from the spirit and scope of the present invention. The following detailed description is, therefore, not be taken in a limiting sense, and the scope of the present invention is defined by the appended claims and their equivalents.

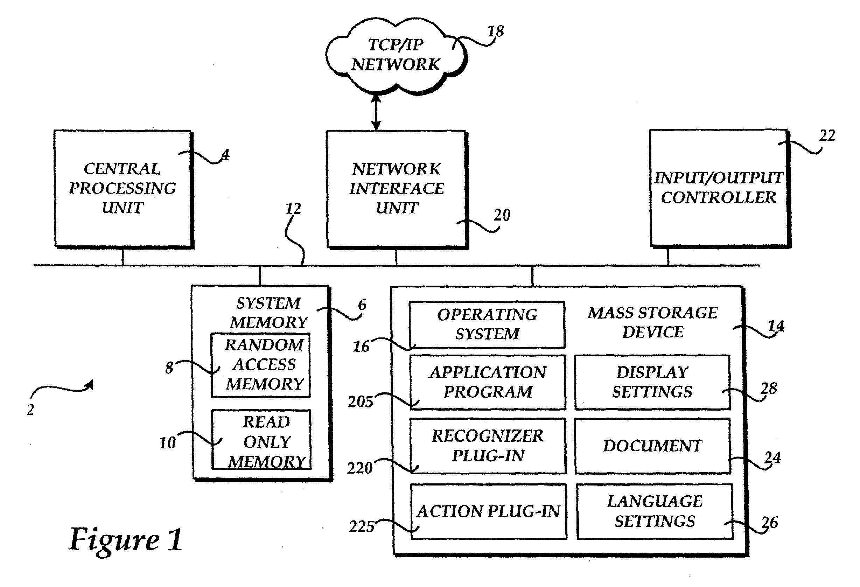

Referring now to the drawings, in which like numerals represent like elements through the several figures, aspects of the present invention and the illustrative operating environment will be described. FIGURE 1 and the following discussion are intended to provide a brief, general description of a suitable computing environment in which the invention may be implemented. While the invention will be described in the general context of program modules that execute in conjunction with an application program that runs on an operating system on a personal computer, those skilled in the art will recognize that the invention may also be implemented in combination with other program modules. Additional aspects of an illustrative operating environment and software architecture for implementing the various embodiments of the present invention are described in U.S. Patent Application No. 09/588,411, entitled "Method and System for Semantically Labeling Strings and Providing Actions Based on Semantically Labeled Strings", which is expressly incorporated herein by reference.

Generally, program modules include routines, programs, components, data structures, and other types of structures that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Turning now to FIGURE 1, an illustrative computer architecture for a personal computer 2 for practicing the various embodiments of the invention will be described. The computer architecture shown in FIGURE 1 illustrates a conventional personal computer, including a central processing unit 4 ("CPU"), a system memory 6, including a random access memory 8 ("RAM") and a read-only memory ("ROM") 10, and a system bus 12 that couples the memory to the CPU 4. A basic input/output system containing the basic routines that help to transfer information between elements within the computer, such as during startup, is stored in the ROM 10. The personal computer 2 further includes a mass storage device 14 for storing an operating system 16, application programs, such as the application program 205, and data.

The mass storage device 14 is connected to the CPU 4 through a mass storage controller (not shown) connected to the bus 12. The mass storage device 14 and its associated computer-readable media provide non-volatile storage for the personal computer 2. Although the description of computer-readable media contained herein refers to a mass storage device, such as a hard disk or CD-ROM drive, it should be appreciated by those skilled in the art that computer-readable media can be any available media that can be accessed by the personal computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, DVD, or other optical storage, magnetic cassettes, magnetic tape, magnetic disk storage or other magnetic storage devices, or any other medium which can be used to store the desired information and which can be accessed by the computer.

According to various embodiments of the invention, the personal computer 2 may operate in a networked environment using logical connections to remote computers through a TCP/IP network 18, such as the Internet. The personal computer 2 may connect to the TCP/IP network 18 through a network interface unit 20 connected to the bus 12. It should be appreciated that the network interface unit 20 may also be utilized to connect to other types of networks and remote computer systems. The personal computer 2 may also include an input/output controller 22 for receiving and processing input from a number of devices, including a keyboard or mouse (not shown). Similarly, an input/output controller 22 may provide output to a display screen, a printer, or other type of output device.

As mentioned briefly above, a number of program modules and data files may be stored in the mass storage device 14 and RAM 8 of the personal computer 2, including an operating system 16 suitable for controlling the operation of a networked personal computer, such as the WINDOWS XP operating system from MICROSOFT CORPORATION of Redmond, Washington. The mass storage device 14 and RAM 8 may also store one or more application programs. In particular, the mass storage device 14 and RAM 8 may store an application program 205 for creating and editing an electronic document 24. For instance, the application program 205 may comprise a word processing application program and the electronic document 24 may comprise a word processing document. The application program 205 may also comprise a spreadsheet application program and the electronic document 24 comprise a spreadsheet. Similarly, the application program 205 may comprise an electronic mail application program and the electronic document 24 may comprise an electronic mail message. Application programs for creating and editing other types of electronic documents may also be used with the various embodiments of the present invention.

Embodiments of the present invention provide program modules for use in conjunction with the application program 205 that provide information related to a location described or referenced within the electronic document 24. While it is appreciated that embodiments of the invention may be implemented with other software structures, exemplary embodiments of the invention provide a recognizer plug-in 220 and an action plug-in 225. As will be described in greater detail below, the recognizer plug-in 220 recognizes strings associated with a location. For illustrative purposes, strings associated with a location may include any reference to a geographic location or any other type of area. The strings associated with a location may include a city name, state, country, providence, district, county, zone, etc. In other examples, the text strings associated with a location may include names of a residence, business, or any other entity. The recognizer plug-in 220 then passes this information to the application program 205 for use by the action plug-in 225. The action plug-in 225 performs actions on the recognized strings to display additional information related to the location.

According to various embodiments of the present invention, the action plug-in 225 may also generate a list of actions that may be performed on a given string. As a part of this process, the action plug-in 225 may query language settings 26 of the application program 205 or operating system 16. The language settings 26 specify the current user interface language. The list of actions may then be created in the current user interface language. Moreover, the action plug-in 225 may also consult the display settings file 28 to generate action menu items for each source unit name enabled for use with all enabled languages and for each source unit name enabled for use with the current user interface language. Additional details regarding the operation of the recognizer plug-in 220 and the action plug-in 225, including the use of the display settings file 28 and the language settings 26, will be described in greater detail below.

As discussed briefly above, the display settings file 28 is utilized by both the recognizer plug-in 220 and the action plug-in 225. In particular, the recognizer plug-in 220 utilizes portions of the display settings file 28 to determine the location names or other data that is recognized within a string of text, and the action plug-in 225 utilizes the display settings file 28 to create the action menus that should be presented to the user and to actually perform the display of additional information related to the location. Although a display settings file 28 is shown as one way to implement the invention, it will be appreciated by those of ordinary skill in the art that the additional information related to the location can be obtained from other sources, such as a server, a client program, a user-customizable form, or any other data source.

In one example, the display settings file 28 comprises a number of fields that may be populated with source names, where each source name may be related to a location. As noted above, a source name may include a city name, state, country, providence, district, county, zone, etc. As described in more detail below, the recognizer plug-in 220 uses the text or data stored in source name field to identify locations. In addition, the display settings file 28 may contain, or have pointers or links to, the additional information related to the locations referenced in each source name field. For example, the additional information related to each location may include a link to a map, an actual map, telephone area codes, and any other type of information that is related to each respective location. The fields may also contain a locale identification number to enable the invention to operate with different languages. In addition, the display settings file 28 may also contain data used for currency conversion, or other types of conversions, such as conversions between miles and kilometers, inches and centimeters, and other measurement units. It should be appreciated that these examples fields of the display settings file 28 are merely illustrative examples of the types of data that can be involved in implementing the present invention.

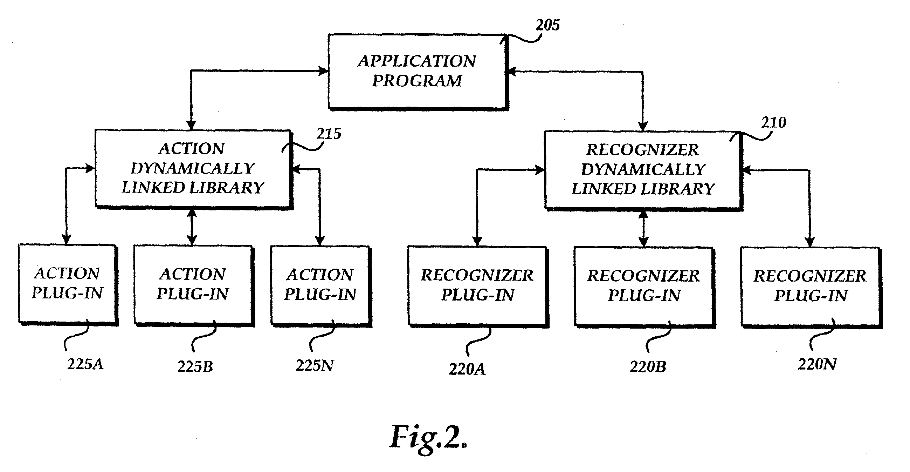

Referring now to FIGURE 2, an illustrative software architecture for use in conjunction with the various embodiments of the present invention will be described. The architecture shown in FIGURE 2 includes an application program 205, such as a word processor application program, an email application program, a spreadsheet application program, or other type of application program for creating and editing electronic documents. The application program 205 may also comprise a Web browser. The application program 205 is able to communicate with a recognizer dynamically linked library ("DLL") 210 and an action DLL 215. As will be described in greater detail below, the recognizer DLL 210 controls one or more recognizer plug-ins 220A-220N and the action DLL 215 controls one or more action plug-ins 225A-225N.

According to one embodiment of the invention, the recognizer plug-ins 220A-220N and the action plug-ins 225A-225N are automation servers. Automation servers are well-known software components that are assembled into programs or add functionality to existing programs running on the WINDOWS XP operating system from MICROSOFT CORPORATION of Redmond, Washington. Automation servers may be written in a variety of computing languages and can be plugged and unplugged from a program at runtime without having to recompile the program.

The recognizer DLL 210 handles the distribution of text strings from an electronic document being edited by the application program 205 to the individual recognizer plug-ins 220A-220N. The recognizer plug-ins 220A-220N recognize particular strings in an electronic document, such as a word processing document or a spreadsheet document. The recognizer plug-ins 220A-220N may be packaged with the application program module 205 or they may be written by third parties to recognize particular strings of interest. Typically, the recognizer DLL 210 passes strings to the recognizer plug-ins 220A-220N in single paragraphs or cell value increments. However, strings may be passed to the recognizer plug-ins 220A-220N in other sizes and formats.

As part of recognizing certain strings as including semantic information, the recognizer plug-ins 220A-220N determine which strings are to be labeled and how they are to be labeled. After receiving these results from the various recognizer plug-ins 220, the recognizer DLL 210 sends semantic categories to the application program module 205. According to one actual embodiment of the invention, a recognizer plug-in 220 is provided for recognizing strings that are stored in the display setting file 28 or another storage device. Once a string is recognized, the recognizer plug-in 220 may return information describing the string, such as the length of the string and the ASCII code for the first character.

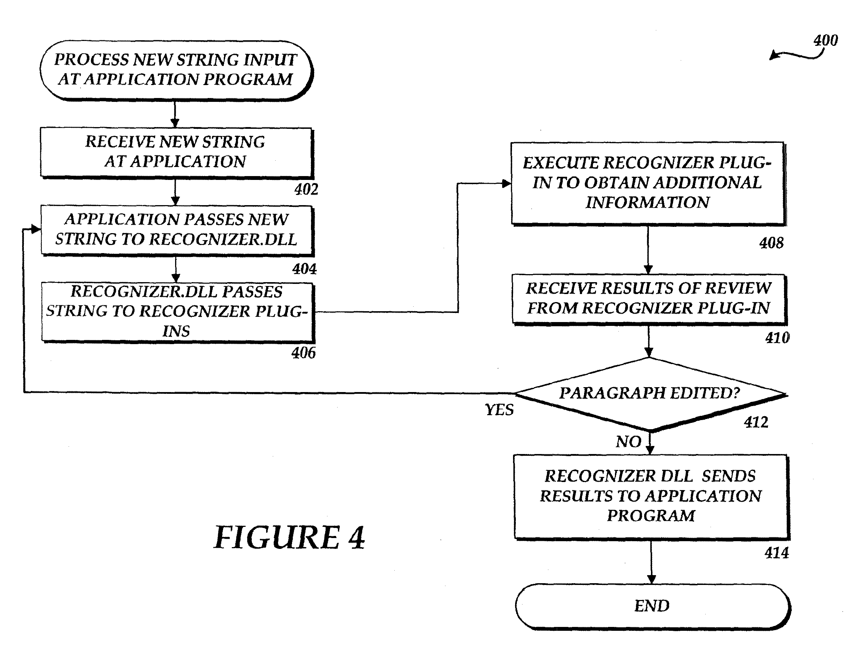

It should be appreciated that each of the recognizer plug-ins 220A-220N are executed separately. The recognizer DLL 210 is responsible for handling the asynchronicity that results from different recognizer plug-ins 220A-220N returning results at different times. In this manner, various types of data may be recognized within a string and different actions provided for each semantically labeled string. Additional details regarding the operation of the recognizer plug-in 220 for recognizing specific words and phrases in a string will be described below with reference to FIGURE 4.

After a string is labeled by a recognizer plug-in 220A-220N, schema information, which may include information from the display setting file 28, is sent to the application program module 205. A user of the application program module 205 may then execute actions that are associated with the schema information on the recognized string. The action DLL 215 manages the action plug-ins 225A-225N that are executed in order to perform the actions. As with the recognizer plug-ins 220A-22N, the action plug-ins 225A-225N may be packaged with the application program module 205 or written by third parties to perform particular actions that are of interest. The action plug-ins 225A-225N provide possible actions to be presented to the user based upon the schema information associated with the string. As will be described in greater detail below, the list of actions provided to the user is dynamically generated for each schema type. This information is then provided to the application program 205 which displays the list of actions to the user when the string is selected.

After an action has been chosen from the list of actions, the action DLL 215 manages the appropriate action plug-in 225A-225N and passes the necessary information between the action plug-in and the application program module 205 so that the action plug-in may execute the desired action. Typically, the application program module 205 sends the action DLL 215 an automation request to invoke the action the user has selected. As will be described in greater detail below, one embodiment of an action plug-in 225 provides additional information related to a location or geographic area referenced in a recognized string.

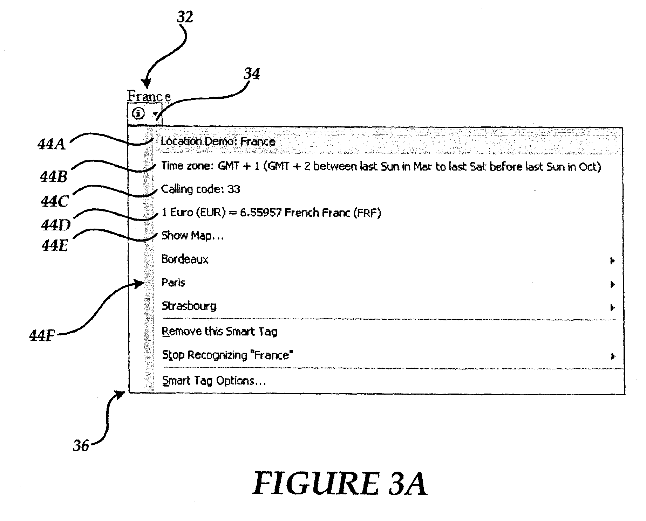

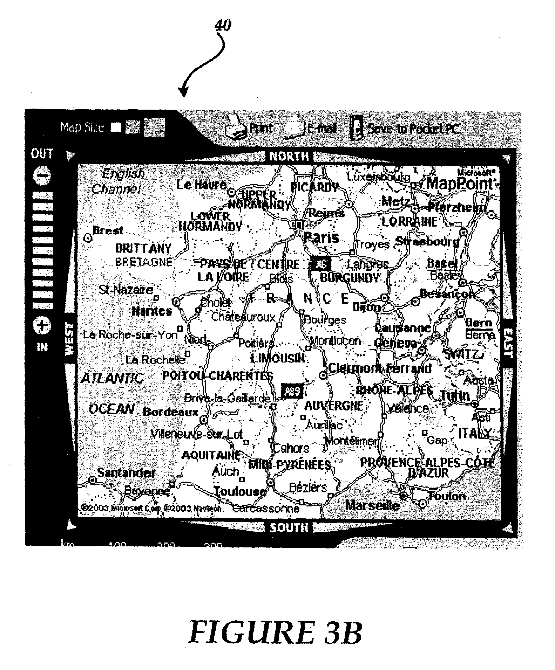

Referring now to FIGURES 3A and 3B, an illustrative user interface provided by the various embodiments of the present invention will be described. As shown in FIGURE 3A, a string 32 may be typed by a user into an application program 205. In this example, the string has characters that spell out the word "France." Once the user has provided the string, the string is provided to a recognizer plug-in 220 that recognizes character combinations contained within the string, such as the word "France." In this example it is given that the word "France" is located in the display setting file 28. Since the word "France" is located in the display setting file 28, the string 32 would have an associated name identified by the recognizer plug-in 220. Therefore, the application program module 205 provides an indication to the user that actions may be performed on the string 32. This indication may be provided to the user by highlighting the string 32 or providing a user interface indication 34 in proximity to the string 32. In the example embodiment shown in FIGURE 3A, the user interface indication 34 is shown as an icon having a pull-down menu function.

When the string 32 or the user interface indication 34 is selected by a user, a list of actions is displayed. This list of actions may comprise a dropdown menu 36 having one or more menu items corresponding to the list of actions that may be performed on the string 32. According to one embodiment of the invention, the contents of the dropdown menu 36 provide actions that are related to the location described or referenced in the string 32. In the example shown in FIGURE 3A, a first action 44A allows users to view additional information about France. Once selected, this first action 44A may display additional information in the application program 205 or provide link to a Web page that is suitable for viewing in a Web browser application or any other user interface. Also shown in FIGURE 3A, a second action 44B displays time zone information related to France, and a third action 44C displays a telephone calling code information related to France. The telephone calling code information can be base on information gathered from other servers on the Internet or from any other suitable source, such as a local or remote database.

A fourth action 44D may also invoke additional processing for the calculation of a currency conversion. Processes and methods for currency conversion are described further in US patent application No. 10/140,544, entitled "Method, System, And Apparatus For Converting Numbers Between Measurement Systems Based Upon Semantically Labeled Strings," the subject matter of which is specifically incorporated by reference. Generally described, the system determines a currency specific to the area described in the string 32, and then calculates a currency conversion value. The currency conversion can be base on information gathered from other servers on the Internet, such as a currency exchange server, or from any other suitable source, such as a local computer.

As shown in FIGURES 3A and 3B, map information may also be displayed upon the selection of a fifth action 44E. In this embodiment, an actual map, information describing a geographical layout or any other like information may be displayed to a user. Other information that may also be displayed includes driving directions, topography, geography or any other like information related to the location. In once the fifth action 44E is selected, a map 40, which is depicted in FIGURE 3B, may be obtained from a data source and displayed to a user in the application program 205 or any other suitable user interface. As will be appreciated by those skilled in the art, a data source may be any suitable computing source, such as a server on the Internet or a local database, and the map information may be displayed in a Web browser application or any other user interface.

In addition to the above-described features, the list of actions may also include names of other locations related to, e.g., in proximity to or within, the location described in the string 32. For example, the list of actions in FIGURE 3A displays location menu options 44F for other locations related to France: Bordeaux, Paris, and Strasbourg. In such an embodiment, each of these menu options 44F are configured to generate an additional set of menu items for each listed area. For instance, if selected, the Bordeaux menu option, may generate a list of menu options for showing a map, telephone calling code or other information related to Bordeaux. Similar to the features described above, this information may originate from the display settings file 28 or any other networked data source.

Turning now to FIGURE 4, an illustrative routine 500 will be described for processing the input of a new string at the application program 205. The routine 500 begins at block 502, where the application program 205 receives a new string, such as when a user enters a new paragraph into an electronic document or edits a previously entered paragraph. From block 502, the routine 500 continues to block 504 where the application program 205 passes the new string to the recognizer DLL 210. As described above, the recognizer DLL 210 is responsible for communicating with the application program 205, managing the jobs that need to be performed by the recognizer plug-ins 220A-220N, receiving results from the recognizer plug-ins 220A-220N, and sending information, such as the schema information described above, to the application program module 205 for recognized strings. It should be understood that, in one embodiment of the invention, a paragraph is passed to the recognizer DLL 210 at block 504. However, in alternative embodiments, a sentence, the contents of a spreadsheet cell, a section of the document, the entire document, etc., may be passed to the recognizer DLL 210. In other words, it should be appreciated that the embodiments of the present invention are not limited to simply passing a paragraph to the recognizer DLL 210.

From block 504, the routine 500 continues to block 506, where the recognizer DLL 210 passes the string to the recognizer plug-ins 220A-220N. The routine 500 then continues to block 508 where the recognizer plug-ins are executed on the paragraph to recognize keywords or characters within the string. As described above, this embodiment of the present invention conducts text matches with words or phrases stored in a data source, such as the display settings file 28 or another like file stored in the local computer or a remote computer. If it is determined that there is a match between the text of the string and one or more words or phrases in the data source, results of this part of the process are stored.

At block 510, the results from the recognizer plug-in 220 are received at the recognizer DLL 210. The routine 500 then continues to block 512, where a determination is made by the recognizer DLL 210 as to whether the paragraph has been edited since the string was transmitted to the recognizer plug-ins 220A-220N. If the paragraph has been edited, the routine 500 returns to block 504, where the edited string is passed to the recognizer DLL 210. If the paragraph has not been edited, the routine 500 continues to block 514, where the recognizer DLL 210 sends the results received from the recognizer plug-in 220 to the application program 205, where the results of the routine 500 and additional information related to the recognized string are displayed as described above. The routine 500 then continues to block 516, where it ends.

Based on the foregoing, those skilled in the art should appreciate that various embodiments of the present invention provide a method, system, apparatus, and computer-readable medium for identifying predetermined strings and providing information related to a location. The above specification, examples and data provide a complete description of the manufacture and use of the composition of the invention. Since many embodiments of the invention can be made without departing from the spirit and scope of the invention, the invention resides in the claims hereinafter appended.

## Claims

1. In a system for creating and editing an electronic document, a method for discovering information related to a location, wherein the method comprises:
determining if a string contained within the electronic document relates to a location;
if it is determined that the string relates to a location, associating the string with a list of actions that may be performed, wherein the list of actions identifies information related to the location;
receiving a selection of a specific action from the list of actions; and
generating a display of the selected information related to the location based on the selection of the specific action.

2. The method of Claim 1, wherein the string identifies a name of the location.

3. The method of Claim 1, wherein the information related to the location identifies a telephone area code related to the location, and wherein the display of the selected information includes a display of the telephone area code.

4. The method of Claim 1, wherein the information related to the location includes a geographic map of the location, and wherein the display of the selected information includes a display of the geographic map of the location.

5. The method of Claim 1, wherein the information related to the location includes a result of a currency conversion, and wherein the display of the selected information includes a display of the result.

6. The method of Claim 1, wherein the information related to the location includes a list of additional locations, wherein the additional locations have a geographical relation to the location.

7. The method of Claim 6, wherein the method further comprises:
receiving a selection of a specific additional location from the list of additional locations;
associating a second list of actions that may be performed, wherein the second list of actions identifies information related to the specific additional location; and
generating a display of the second list of actions.

8. A computer-readable medium comprising computer-readable instructions which, when executed by a computer, cause the computer to perform the method of Claim 1.

9. A computer-controlled apparatus capable of performing the method of Claim 1.

10. In a system for creating and editing an electronic document, a method for discovering information related to a location, wherein the method comprises:
determining if a string contained within the electronic document relates to a location;
if it is determined that the string relates to a location, associating the string with a list of items, wherein the list of items provides a link to information related to the location, and wherein the one or more items directly displays additional information related to the location.

11. The method of Claim 10, wherein the string identifies a name of the location.

12. The method of Claim 10, wherein the additional information includes a telephone area code related to the location.

13. The method of Claim 10, wherein the additional information a result of a currency conversion.

14. The method of Claim 10, wherein the additional information includes a list of additional locations, wherein the additional locations have a geographical relation to the location.

15. A computer-readable medium comprising computer-readable instructions which, when executed by a computer, cause the computer to perform the method of Claim 10.

16. A computer-controlled apparatus capable of performing the method of Claim 10.

17. A system for creating and editing an electronic document and discovering information related to a location, the system comprising:
means for determining if a string contained within the electronic document relates to a location;
means for associating the string with a list of actions that may be performed, wherein the list of actions identifies information related to the location, wherein associating the string with a list of actions is in response to determining that the string relates to a location;
means for receiving a selection of a specific action from the list of actions; and
means for generating a display of the selected information related to the location based on the selection of the specific action.

18. The system of Claim 17, wherein the string identifies a name of the location.

19. The system of Claim 17, wherein the information related to the location identifies a telephone area code related to the location, and wherein the display of the selected information includes a display of the telephone area code.

20. The system of Claim 17, wherein the information related to the location includes a geographic map of the location, and wherein the display of the selected information includes a display of the geographic map of the location.

21. The system of Claim 17, wherein the information related to the location includes a result of a currency conversion, and wherein the display of the selected information includes a display of the result.

22. The system of Claim 17, wherein the information related to the location includes a list of additional locations, wherein the additional locations have a geographical relation to the location.
